# EUROPÄISCHE PATENTANMELDUNG

(11) **EP 0 558 769 A1**
(43) Veröffentlichungstag der Anmeldung: **08.09.1993**
(21) Anmeldenummer: 92103490.6
(22) Anmeldetag: 29.02.1992
(51) Int. Cl.: F02C 3/107, F02K 3/06

(54) **Turbofantriebwerk mit Niederdruckverdichter ( Booster )**

(71) Anmelder: MTU MOTOREN- UND TURBINEN-UNION MÜNCHEN GMBH, D-80976 München (DE)
(72) Erfinder: Schmidt-Eisenlohr, Uwe, W-8000 München 60 (DE)

(57) **Zusammenfassung**

Ein Turbofantriebwerk (1) mit einem, von der Niederdruckturbine (16) über eine Welle direkt (17) angetriebenen Fanroton (3), weist einen Niederdruckverdichter (5) (Booster) mit zwei gegenläufigen Boosterrotoren (18a,b) auf. Ein Boosterrotor (18) ist direkt mit dem Fanrotor (3) verbunden, der andere wird über ein Planetengetriebe (6), welches mit der Welle (17) gekoppelt ist, angetrieben. Da nur etwa die halbe Boosterleistung vom Getriebe (6) übertragen werden muß, kann das Getriebe (6) klein gehalten werden, wodurch der Kühlaufwand entsprechend gering bleibt.

## Beschreibung

Die Erfindung betrifft ein Turbofantriebwerk mit einem Fanrotor und einer von einem Gaserzeuger getriebenen Niederdruckturbine, welche den Fanrotor und einen im Primärkanal zwischen Fanrotor und Gaserzeuger angeordneten Niederdruckverdichter (Booster) über eine triebwerkskoaxiale Welle antreibt, wobei der Gaserzeuger vom mehrstufigen Niederdruckverdichter aufgeladen wird.

Bisher ausgeführte Turbofantriebwerke weisen zur Leistungssteigerung einen einwelligen Niederdruckverdichter (Booster) auf, der direkt von der Niederdruckwelle angetrieben wird. Da diese Niederdruckverdichter relativ zum Fan auf kleinem Radius liegen und mit der kleinen Drehzahl der Niederdruckwelle drehen, steht ihnen nur wenig Umfangsgeschwindigkeit zur Verfügung, so daß sie nur wenig Druckverhältnis liefern können. Mit zunehmenden Nebenstromverhältnis, d.h. mit zunehmenden Fandurchmesser bei gegebener Größe des Kerntriebwerks nimmt die Drehzahl der Niederdruckwelle ab, weil die Umfangsgeschwindigkeit am Außenschnitt des Fanrotors nicht zunehmen sollte. Damit verschlechtern sich die Randbedingungen für den Booster weiter, so daß zusätzliche Boosterstufen notwendig werden, um das Druckverhältnis halten zu können. Da im Rahmen von Leistungssteigerungen in der Regel die Aufladung des Kerntriebwerks und damit das Druckverhältnis des Boosters noch erhöht werden muß, werden die wiederum zusätzlichen Boosterstufen notwendig, was zur Verlängerung und Gewichtserhöhung des Triebwerks führt und nur sehr wenig Druckverhältnis-Steigerung bringt.

Zur Lösung dieses Problems ist aus der DE 39 43 102 A1 bekannt, den Niederdruckverdichter mit der Niederdruckturbine über eine Welle direkt zu koppeln, wobei die Drehzahl des Niederdrucksystems zum optimalen Betrieb des Niederdruckverdichters relativ hoch ist. Der Fanrotor ist mit der Welle über ein Untersetzungsgetriebe verbunden, um so das für den Fan notwendige Drehzahlniveau zu gewährleisten. Da jedoch die gesamte Antriebsleistung für den Fan im Getriebe umgesetzt werden muß, baut das Getriebe sehr schwer und erfordert aufwendige Kühlmaßnahmen zur Abführung der Verlustleistung.

Hiervon ausgehend ist es Aufgabe der Erfindung ein gattungsgemäßes Turbofantriebwerk anzugeben, desssen Niederdruckverdichter bei kompakter und leichter Bauweise ein möglichst hohes Druckverhältnis erzielt. Antriebsseitige Wirkungsgradverluste sind gering zu halten.

Erfindungsgemäß wird die Aufgabe dadurch gelöst, daß der Niederdruckverdichter zwei gegenläufige, konzentrische Boosterrotoren aufweist, wobei der Fanrotor und ein Boosterrotor dirket mit der Welle verbunden sind und der andere Boosterrotor über ein mit der Welle in Eingriff stehendes Umkehrgetriebe angetrieben wird.

Die erfindungsgemäße Anordnung hat den Vorteil, daß aufgrund der beiden gegenläufigen Boosterrotoren das Druckverhältnis etwa doppelt so hoch ist als bei Niederdruckverdichtern mit gleichlaufendem Rotor bei der gleichen Anzahl von Stufen. Da nur einer der beiden Boosterrotoren mit dem Umkehrgetriebe gekoppelt ist, und der Fan sowie der mit dem Fan rotierende Boosterrotor dirket über die Welle mit der Niederdruckturbine verbunden sind, kann das Getriebe sehr kompakt ausfallen. Daher ist nur mit geringem Wärmeanfall aufgrund der Getriebeverluste zu rechnen; Kühlmaßnahmen sind nur im reduzierten Umfang notwendig.

Vorzugsweise ist das Umkehrgetriebe als Planetengetriebe ausgeführt, welches wegen seiner konzentrischen, kompakten Bauweise günstig in ein Turbofantriebwerk integriert werden kann und zudem einen hohen Wirkungsgrad aufweist.

Eine alternative Ausführung der Erfindung gemäß der Merkmale des Anspruches 3 zeichnet sich durch die einfache, gewichtssparende und besonders zuverlässige Bauweise aus.

Je nach geforderter Machzahl an den Boosterstufen ist es notwendig die gegenläufigen Boosterrotoren mit verschiedener oder gleicher Drehzahl umlaufen zu lassen. Einen besonders großen Variationsbereich der Standübersetzungen des Planetengetriebes ist durch die Ausführung der Erfindung nach den Merkmalen des Anspruches 4 gegeben, wodurch hinsichtlich der möglichen Boosterauslegungen ein weiter Variationsbereich geschaffen wird.

Eine besonders kompakte und steife Lagerung des Steges des Planetengetriebes wird durch die Integration des Steges in den Lagerträger des Hauptlagers erzielt.

In einer weiteren alternativen Ausführungsform der Erfindung, wonach der Steg des Planetengetriebes mit der Welle verbunden ist und mit dieser rotiert und die ersten Ritzel der zweistufigen Planetenräder mit einem gehäusefesten Hohlrad kämmen und die zweiten Ritzel mit einem rotierenden Hohlrad kämmen, welches den inneren oder äußeren Boosterrotor treibt, wird durch die zweifache Wälzpaarung Hohlrad-Ritzel ein besonders hoher Getriebewirkungsgrad erzielt. Vorzugsweise ist hierbei das gehäusefeste Hohlrad am Träger des vorderen Hauptlagers der Welle befestigt, wodurch sich eine besonders steife Anordnung des Getriebes am Triebwerksgehäuse ergibt.

Eine raumsparende Anordnung des Getriebes im Turbofantriebwerk ergibt sich durch die bevorzugte Ausführung der Erfindung gemäß der Merkmale nach Anspruch 8.

Vorzugsweise ist der Niederdruckverdichter gemäß dem Merkmal nach Anspruch 9 ausgeführt, wodurch sich Statorstufen zwischen den Rotorstufen aufgrund der Gegenläufigkeit benachbarter Rotorschaufelreihen erübrigen.

Weitere vorteilhafte Ausbildungen der Erfindung ergeben sich aus den Ansprüche 10 bis 16.

Für Montage- und Wartungsarbeiten an den Boosterrotoren ist es von Vorteil, wenn diesen statische, nicht rotierende Bauteile gegenüberliegen. Zudem sollte die Möglichkeit zur Ansteuerung von Schaufelverstelleinrichtungen an den Boosterrotoren über statische Bauteile gegeben sein. In diesem Sinne erweist sich eine Ausführung mit einer Merkmalskombination nach den Ansprüchen 9 bis 12 als besonders günstig. Durch die Anbringung eines Eintrittsstators vor der ersten, mit dem Fanrotor umlaufenden Rotorschaufelreihe, erfolgt eine optimale Anströmung auch bei unterschiedlichsten Drosselzuständen des Triebwerks. Da die letzte Rotorschaufelreihe des Niederdruckverdichters dem zum Fanrotor gegenläufigen Boosterrotor zugeordnet ist, wird der Primärkanal stromab des Niederdruckverdichters in den meisten Fällen drallfrei durchströmt. Um eine drallfreie Durchströmung des Primärkanals stromab des Niederdruckverdichters auch über einen größeren Drosselbereich zu gewährleisten, empfiehlt sich alternativ zu verstellbaren Schaufeln des Boosterrotors die Verwendung eines Austrittsstators.

Eine Optimierung des Niederdruckverdichters hinsichtlich maximaler Ausladung des Kerntriebwerks bei möglichst wenigen Boosterstufen, ist durch eine Ausführung des Triebwerks mit einer Merkmalskombination der Ansprüche 9, 14 und 15 gegeben, wobei die erste Rotorschaufelreihe des Niederdruckverdichters mit einem zum Fan gegenläufigen Boosterrotor verbunden ist. Bei einer entsprechend gewählten Getriebekonfiguration kann dabei dieser Rotor mit einer im Vergleich zum Fanrotor geringeren Drehzahl betrieben werden, wodurch die Anströmmachzahl an der ersten, gegenläufigen Rotorschaufelreihe in einem günstigen Bereich gehalten werden kann.

Vier Ausführungsbeispiele der Erfindung werden nachfoglend unter Bezugnahme auf die beigefügten Zeichnungen erläutert.

Es zeigt:
- Fig. 1: eine teilweise geschnittene Seitenansicht eines Turbofantriebwerks mit gegenläufigem Booster,
- Fig. 2: einen Ausschnitt des Turbofantriebwerks nach Fig. 1 mit Fanrotor, Niederdruckverdichter und Umkehrgetriebe,
- Fig. 3: eine Variante des Turbofantriebwerks nach Fig. 1 im Ausschnitt mit Fanrotor, Niederdruckverdichter und Umkehrgetriebe,
- Fig. 4: einen Ausschnitt des Turbofantriebwerks nach Fig. 3 mit Eintrittsstator im Primärkanal und
- Fig. 5: eine weitere Variante des Turbofantriebwerks mit umlaufenden Steg und Ein- und Austrittsstator im Primärkanal.

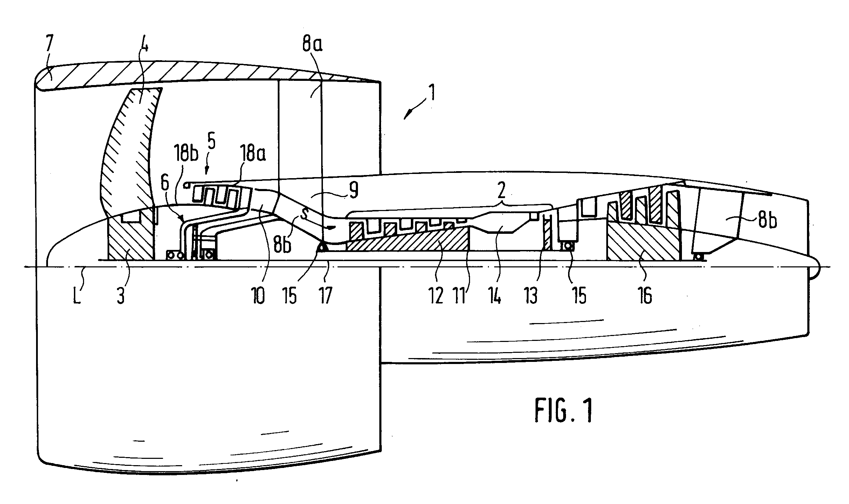

Das in Fig. 1 gezeigte Turbofantriebwerk 1 besteht aus einem als Gasturbine ausgeführten Gaserzeuger 2, einem stromauf angeordneten Fanrotor 3, an welchem über dem Umfang verteilte Fanschaufeln 4 angebracht sind, aus einem Niederdruckverdichter 5 und einem Umkehrgetriebe 6. Radial außerhalb der Fanschaufeln 4 ist ein Mantel 7 vorgesehen, der sich in triebwerksaxialer Richtung erstreckt. Über eine Anzahl regelmäßig beabstandeter Rippen 8a ist der Mantel 7 am Triebwerksgehäuse 9 des Gaserzeugers 2 angebracht.

Der im Primärkanal 10 angeordnete Gaserzeuger 2 besteht im wesentlichen aus einem am Hochdruckrotor 11 angeflanschten Hochdruckverdichter 12 und einer Hochdruckturbine 13 und einer dazwischen geschalteten Brennkammer 14. Der Hochdruckrotor 11 ist an seinen beiden Enden mit Lagern 15 versehen, welche Betriebslasten über, den Primärkanal durchdringende Rippen 8b in das Triebwerksgehäuse 9 einleiten.

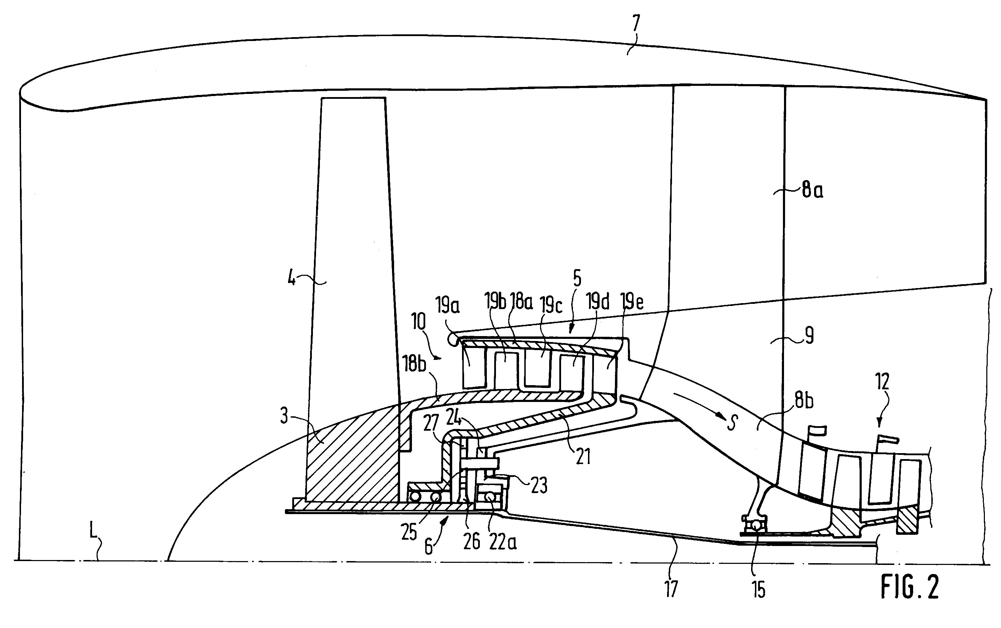

Stromab der Hochdruckturbine 13, ist eine Niederdruckturbine 16 angeordnet, die über eine triebwerkskoaxiale Welle 17, welche sich radial innerhalb des Hochdruckrotors 11 stromaufwärts erstreckt, mit dem Fanrotor 3 verbunden. Konzentrisch zur Welle 17 ist ein als Planetengetriebe ausgeführtes Umkehrgetriebe 6 angeordnet, welches den radial äußeren Boosterrotor 18a des zweirotorig ausgebildeten Niederdruckverdichters 5 antreibt. Der mehrstufige Niederdruckverdichter 5 mit zwei zur Welle 17 konzentrischen Boosterrotoren 18a, b ist stromauf des Gaserzeugers 2 und der, den Primärkanal 10 durchdringenden Rippen 8b im Primärkanal 10 eingesetzt. Die Rotorschaufelreihe 19 (siehe Fig.2) der Boosterrotoren 18a,b sind rotorweise abwechselnd, axial hintereinander angeordnet, wobei sich die Boosterschaufeln des radial äußeren Boosterrotors 18a von diesen nach radial innen erstrecken und die Boosterschaufeln des radial inneren Boosterrotors 18b von diesen nach radial außen erstrecken.

In Fig. 2 ist ein detaillierter Teilschnitt der vorderen Triebwerkspartie gezeigt. Der radial äußere Boosterrotor 18a ist mit drei Rotorschaufelreihen 19a,c,e bestückt, wobei die Boosterschaufeln der letzten Rotorschaufelreihe 19e an ihren radial inneren Enden mit einem Zwischenkonus 21 verbunden sind und an ihrem radial äußeren Ende mit den übrigen beiden Rotorschaufelreihen 19a,c, des gemeinsamen Boosterrotors 18a verbunden sind. Da die Rotorschaufelreihen 19a,c,e des Niederdruckverdichters 5 mit dem radial äußeren Boosterrotor 18a, welcher vom Umkehrgetriebe angetrieben, gegenläufig zum Fanrotor 3 dreht, verbunden sind, sorgen diese Rotorschaufelreihen 19a,c,e stets für eine weitgehend drallfreie Anströmung der nachfolgenden gegenläufigen Rotorschaufelreihen 19b,d, bzw. für eine drallfreie Durchströmung des Primärkanals 10 zwischen Niederdruckverdichter 5 und Hochdruckverdichter 12. Der radial innere, zweistufige Boosterrotor 18b ist direkt am Fanrotor 3 angeflanscht. Der Fanrotor 3 selbst ist fliegend am vorderen Hauptlager 22a gelagert, wobei das Hauptlager 22a in einem Lagerträger 23 angeordnet ist. Dadurch werden die Betriebslasten des Fanrotors über die Rippen 8b in das Triebwerksgehäuse 9 eingeleitet. Dieser zur Welle 17 konzentrische Lagerträger 23 bildet zudem den gehäusefesten Steg 24 für die Aufnahme der drei einstufigen Planetenräder 25 des Planetengetriebes. Stromauf des Lagerträgers 23 kämmen die Planetenräder 25 einerseits mit dem Sonnenrad 26 des Planetengetriebes und andererseits mit dem Hohlrad 27 des Planetengetriebes in einer Ebene senkrecht zur Triebwerkslängsachse L. Die für den äußeren Boosterotor 18a notwendige Antriebsleistung wird somit von der Welle 17 über das auf der Welle 17 sitzende Sonnrad 26, die Planetenräder 25 und über das Hohlrad 27, welches mit dem Zwischenkonus 21 verbunden ist, abgeführt. Der äußere Boosterrotor 18a ist über den Zwischenkonus 21 auf der Welle 17 stromauf des Sonnenrades 26 gelagert. Die Lagerstellen für die Planetenräder 25, den Fanrotor 3, den äußeren Boosterrotor 18a und das Hohlrad 27 sind somit kompakt beieinander angeordnet, wodurch sich eine positionsgenaue Lagerung der rotierenden Maschinenelemente ergibt. Zudem ist eine gemeinsame Ölversorgung der Lagerstellen möglich.

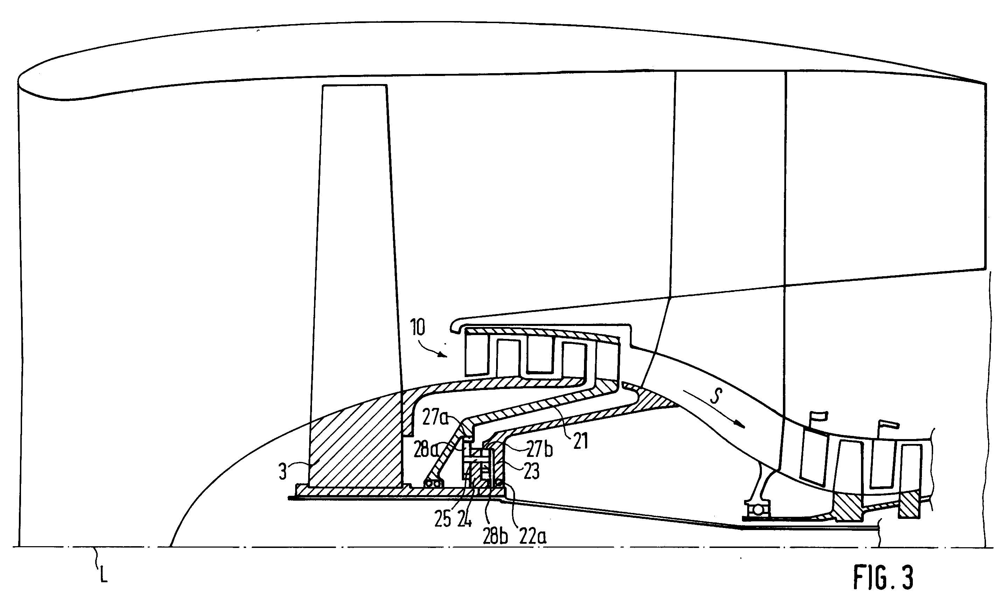

In Fig. 3 ist eine weitere Variante des Turbofantriebwerks 1 gezeigt. Sie unterscheidet sich von der vorbeschriebenen Variante dahingehend, daß der Steg 24 mit den darauf gelagerten Planetenrädern 25 auf der Welle 17 befestigt ist und mit dieser rotiert. Jeweils ein Ritzel 28a der zweistufigen Planetenräder 25 kämmt hierzu mit dem am Zwischenkonus 21 befestigten Hohlrad 27a und jeweils das zweite Ritzel 28b mit einem gehäusefesten Hohlrad 27b, welches mit dem Triebwerksgehäuse 9 über den Lagerträger 23 und die Rippen 8b in Verbindung steht.

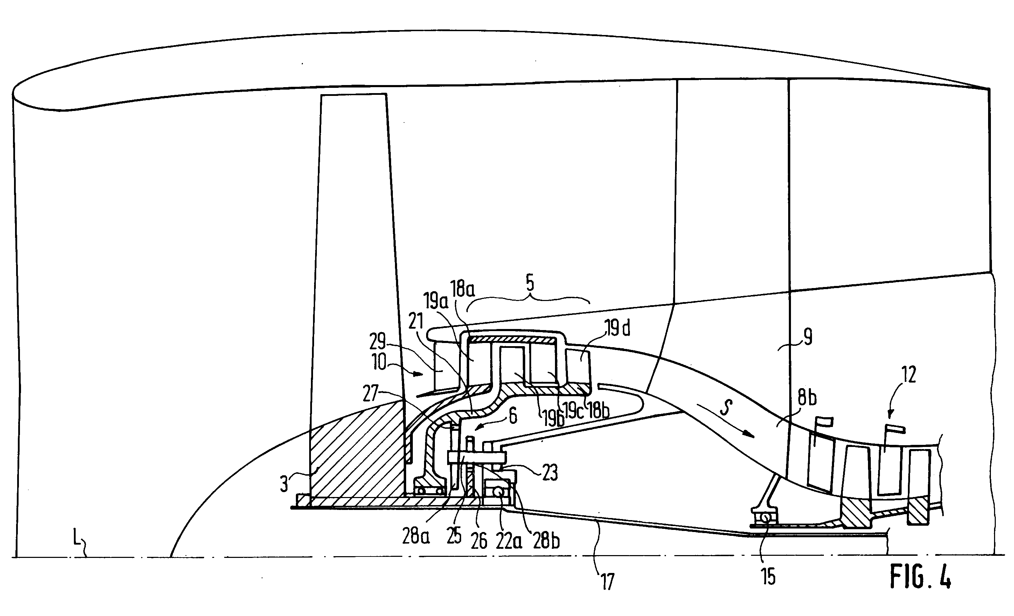

Eine alternative Niederdruckverdichter-Gestaltung ist der Fig. 4 zu entnehmen. Im Gegensatz zu den Boostergestaltungen gemäß der Figuren 2 und 3 weisen die Boosterrotoren 18a, b jeweils zwei Rotorschaufelreihen 19 auf, wobei der äußere Boosterrotor 18a über die erste Rotorschaufelreihe 19a mit dem Fanrotor 3 drehmomentübertragend verbunden ist. Die Boosterschaufeln der ersten Rotorschaufelreihe 19a sind hierzu, wie zuvor beschrieben bei der letzten Rotorschaufelreihe 19e, einerseits mit dem Fanrotor 3 und andererseits mit dem äußeren Boosterrotor 18a verbunden.

Die letzte Rotorschaufelreihe 19d des Niederdruckverdichters 5, welche dem inneren, gegenläufigen Boosterrotor 18b zugeordnet ist, gewährleistet die weitgehend drallfreie Abströmung zum Hochdruckverdichter 12 hin. Der radial innere Boosterrotor 18b, welcher über den Zwischenkonus 21 mit dem rotierenden Hohlrad 27 in Verbindung steht und von diesem gegenläufig zur Welle 17 getrieben wird, ist wiederum auf der Welle 17 gelagert. Die ortsfest im Lagerträger 23 gelagerten Planetenräder 25 sind zweistufig ausgeführt. Zwischen dem Fanrotor 3 und der ersten Rotorschaufelreihe 19a ist ein Eintrittsstator 29 im Primärkanal 10 angeordnet, welcher für eine optimale Anströmung der ersten Rotorschaufelreihe 19a sorgt.

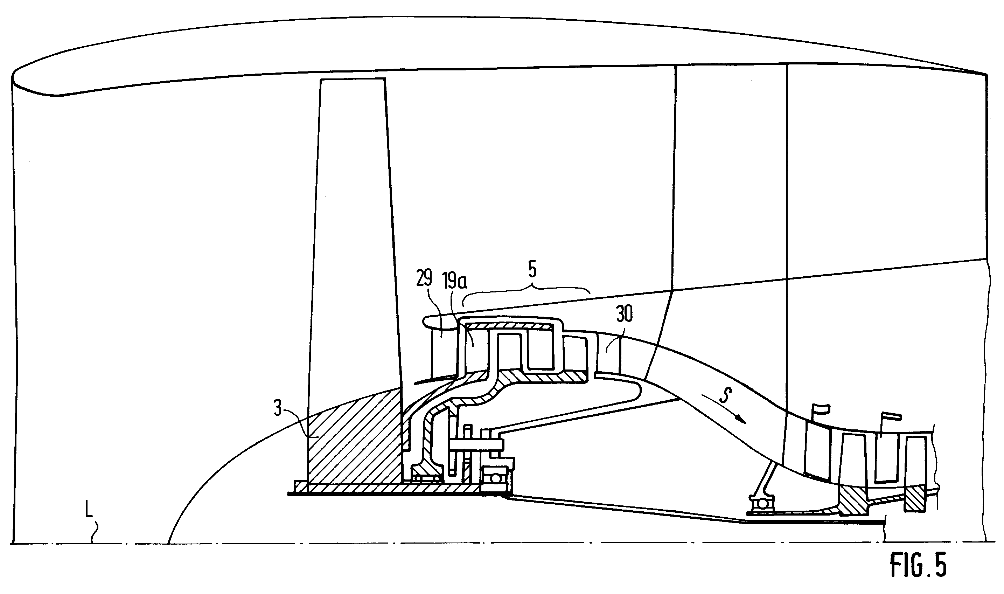

Eine optimale, drallfreie Durchströmung des Primärkanals 10 zwischen Niederdruckverdichter 5 und Hochdruckverdichter 12 auch bei verschiedenen Drosselzuständen ist durch die Plazierung des Austrittsstators 30 am Austritt des Niederdruckverdichters 5, wie in Fig.5 gezeigt, gegeben.

## Patentansprüche

1. Turbofantriebwerk mit einem Fanrotor und einer von einem Gaserzeuger getriebenen Niederdruckturbine, welche den Fanrotor und einen im Primärkanal zwischen Fanrotor und Gaserzeuger angeordneten Niederdruckverdichter (Booster) über eine triebwerkskoaxiale Welle antreibt, wobei der Gaserzeuger vom mehrstufigen Niederdruckverdichter aufgeladen wird, dadurch gekennzeichnet, daß der Niederdruckverdichter (5) zwei gegenläufige, konzentrische Boosterrotoren (18a,b) aufweist, wobei der Fanrotor (3) und ein Boosterrotor (18a oder b) direkt mit der Welle (17) verbunden sind und der andere Boosterrotor (18b bzw. a) über ein mit der Welle (17) in Eingriff stehendes Umkehrgetriebe (6) angetrieben wird.

2. Turbofantriebwerk nach Anspruch 1, dadurch gekennzeichnet, daß das Umkehrgetriebe (6) ein Planetengetriebe ist.

3. Turbofantriebwerk nach Anspruch 2, dadurch gekennzeichnet, daß das Planetengetriebe als Standgetriebe betrieben wird, wobei der Steg (24) des Planetengetriebes ortsfest mit dem Triebwerksgehäuse (9) verbunden ist und die Planetenräder (25) jeweils mit dem an der Welle (17) angebrachten Sonnenrad (26) einerseits und dem mit einem Boosterrotor (18a,b) verbundenen Hohlrad (27) andererseits kämmen.

4. Turbofantriebwerk nach Anspruch 3, dadurch gekennzeichnet, daß die Planetenräder (25) zweistufig ausgeführt sind, wobei jeweils ein Ritzel (28a oder b) der Planetenräder (25) mit dem Sonnenrad (26) und das andere Ritzel (28b bzw. a) mit dem Hohlrad (27) kämmt.

5. Turbofantriebwerk nach einem der Ansprüche 2 bis 4, dadurch gekennzeichnet, daß der Steg (24) des Planetengetriebes den Lagerträger (23) des vorderen Hauptlagers (22a) der Welle (17) bildet.

6. Turbofantriebwerk nach Anspruch 2, dadurch gekennzeichnet, daß der Steg (24) des Planetengetriebes mit der Welle (17) verbunden ist und mit dieser rotiert und die ersten Ritzel (28b) der zweistufigen Planetenräder (25) , mit einem gehäusefesten Hohlrad (27b) kämmen und die zweiten Ritzel (28a) mit einem rotierenden Hohlrad (27a) kämmen, welches den inneren oder äußeren Boosterrotor (18b bzw. a) treibt.

7. Turbofantriebwerk nach Anspruch 6, dadurch gekennzeichnet, daß das gehäusefeste Hohlrad (27a) an einem Lagerträger (23) des vorderen Hauptlagers (22a) der Welle (17) befestigt ist.

8. Turbofantriebwerk nach einem der vorhergehenden Ansprüche, dadurch gekennzeichnet, daß das Umkehrgetriebe (6) im Raum zwischen Welle (17) und Niederdruckverdichter (5), konzentrisch zur Welle (17) und zum Niederdruckverdichter (5) angeordnet ist.

9. Turbofantriebwerk nach einem der vorhergehenden Ansprüche, dadurch gekennzeichnet, daß die Rotorschaufelreihen (19) der Boosterrotoren (18a,b) rotorweise abwechselnd, axial hintereinander angeordnet sind.

10. Turbofantriebwerk nach einem der vorhergehenden Ansprüche, dadurch gekennzeichnet, daß die bezüglich der Strömungsrichtung S erste Rotorschaufelreihe (19a) des Niederdruckverdichters (5) zur Leistungsübertragung mit dem äußeren Boosterrotor (18a) einerseits und dem Fanrotor (3) oder der Welle (17) andererseits drehmomentübertragend verbunden ist und zwischen der ersten Rotorschaufelreihe (19a) und dem Fanrotor (3) im Primärkanal (10) ein Eintrittsstator (29) angeordnet ist.

11. Turbofantriebwerk nach einem der vorhergehenden Ansprüche, dadurch gekennzeichnet, daß die Boosterrotoren (18a,b) jeweils mindestens zwei Rotorschaufelreihen (19) aufweisen, wobei die bezüglich der Strömungsrichtung S letzte Rotorschaufelreihe (19) mit dem radial inneren Boosterrotor (18b) verbunden ist.

12. Turbofantriebwerk nach einem der vorhergehenden Ansprüche, dadurch gekennzeichnet, daß zumindest die bezüglich der Strömungsrichtung S letzten zwei Rotorschaufelreihen (19) verstellbar ausgeführt sind.

13. Turbofantriebwerk nach Anspruch 10 oder 11, dadurch gekennzeichent, daß der Niederdruckverdichter (5) einen Austrittsstator (30) aufweist.

14. Turbofantriebwerk nach einem der Ansprüche 1 bis 9, dadurch gekennzeichnet, daß die bezüglich der Strömungsrichtung S letzte Rotorschaufelreihe (19) des Niederdruckverdichters (5) zur Leistungsübertragung zwischen dem Umkehrgetriebe (6) und dem äußeren Boosterrotor (18a) drehmomentübertragend ausgeführt ist.

15. Turbofantriebwerk nach Anspruch 14, dadurch gekennzeichnet, daß die bezüglich der Strömungsrichtung S erste Rotorschaufelreihe (19a) des Niederdruckverdichters (5) mit dem äußeren Boosterrotor (18a) verbunden ist und/oder zwischen der ersten Rotorschaufelreihe (19a) des Niederdruckverdichters (5) und dem Fanrotor (3) im Primärkanal (10) ein Eintrittsstator (30) angeordnet ist.

16. Turbofantriebwerk nach einem der vorhergehendne Ansprüche, dadurch gekennzeichnet, daß der mit dem Umkehrgetriebe (6) in Verbindung stehende Boosterrotor (18a,b) stromauf des Umkehrgetriebes (6) auf der Welle (17) gelagert ist.
